(19) Europäisches Patentamt / European Patent Office / Office européen des brevets

(11) **EP 4 185 453 B1**

(12) **EUROPEAN PATENT SPECIFICATION**

(45) Date of publication and mention
of the grant of the patent:
**12.06.2024   Bulletin 2024/24**

(21) Application number: **21743211.1**

(22) Date of filing: **22.07.2021**

(51) International Patent Classification (IPC):
**B29C 70/16** (2006.01)   **B29C 53/60** (2006.01)
**B29C 53/80** (2006.01)   **B65H 81/00** (2006.01)
**B29C 70/32** (2006.01)   **B29C 70/38** (2006.01)
**B29C 70/20** (2006.01)   **B29C 70/54** (2006.01)
**B29C 53/62** (2006.01)   **B29B 7/00** (2006.01)
**B29B 7/32** (2006.01)   **B29B 7/74** (2006.01)
**B29C 33/50** (2006.01)

(52) Cooperative Patent Classification (CPC):
**B29C 45/14786; B29C 53/60; B29C 53/62;
B29C 70/207; B29C 70/32; B29C 70/382;
B29C 70/545;** B29B 7/007; B29B 7/325; B29B 7/74;
B29C 33/505; B29C 53/80; B29L 2031/7156;
Y02E 60/32

(86) International application number:
**PCT/EP2021/070515**

(87) International publication number:
**WO 2022/018199 (27.01.2022 Gazette 2022/04)**

(54) **DEVICE AND PROCESS FOR PRODUCING COMPOSITE COMPONENTS COMPRISING AT LEAST ONE WOUND FIBER REINFORCED POLYMER LAYER**

VORRICHTUNG UND VERFAHREN ZUR HERSTELLUNG VON VERBUNDKOMPONENTEN MIT MINDESTENS EINER GEWICKELTEN FASERVERSTÄRKTEN POLYMERSCHICHT

DISPOSITIF ET PROCÉDÉ DE FABRICATION DE COMPOSANTS COMPOSITES COMPRENANT AU MOINS UNE COUCHE DE POLYMÈRE RENFORCÉE DE FIBRES ENROULÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.07.2020   EP 20187244**

(43) Date of publication of application:
**31.05.2023   Bulletin 2023/22**

(73) Proprietor: **BASF SE**
**67056 Ludwigshafen am Rhein (DE)**

(72) Inventors:
• **MEYER, Andre**
  **49448 Lemfoerde (DE)**

• **EMGE, Andreas**
  **49448 Lemfoerde (DE)**

(74) Representative: **BASF IP Association**
**BASF SE**
**GBI-C006**
**67056 Ludwigshafen (DE)**

(56) References cited:
**EP-A2- 2 532 507**        **JP-A- 2015 000 554**
**US-A- 6 096 164**        **US-A1- 2005 247 396**
**US-A1- 2011 240 213**

## Description

The invention relates to a device for producing composite components comprising at least one wound fiber reinforced polymer layer. The invention further relates to a process for producing the composite component comprising at least one wound fiber reinforced polymer layer.

Composite components comprising at least one wound fiber reinforced polymer layer are for example pressure tanks which particularly can be used for storing gas, for example hydrogen.

Such pressure tanks usually are produced by filament winding processes where a liner is placed in a support in which it rotates and fibers are wound around the liner. The fibers usually are applied by using a feeding device which can be moved parallel to the rotational axis of the liner. While the liner rotates during the application of the fibers, the fibers are wound around the liner. Depending on the rotational speed of the liner and the speed with which the feeding device for the fibers moves along the liner, a pattern is generated in which the fibers are applied on the liner.

Depending on the kind of the filament winding process, the fibers can be impregnated with a matrix material before being wound around the liner or the fibers are impregnated after being wound around the liner. Further, also a combination of both processes is possible. If the fibers are impregnated before being wound around the liner, it is possible to impregnate the fibers immediately before winding the fibers around the liners or alternatively to impregnate the fibers separately from the winding process. In this case, by the impregnation, preimpregnated fibers, so called towpregs are obtained and the preimpregnated fibers are wound around the liner.

Usually, the fibers are impregnated before being wound around the liner. For impregnation, the feeding device for the fibers may comprise a bath which contains the matrix material and through which the fibers are guided before being applied on the liner. Such a process for example is described by S.T. Peters, J. Lowrie McLarty, Filament Winding, ASM Handbook, Volume 21: Composites, 2001, pages 536 to 549.

R. Schledjewski, Highly efficient pressure-vessel manufacturing, JEC Magazine #34, July-August 2007, describes a process which allows producing pressure tanks by a filament winding process more effectively by applying impregnated fiber material simultaneously at several locations around the perimeter of the liner. For this purpose, a multi-feed-eye ring winding head is used which has eight feed-eyes through which the fibers are applied on the liner. Each of the feed eyes is connected with a bath for impregnating the fibers with matrix material.

Further processes for filament winding are described for example in N.E.H. Shotton-Gale, Clean Filament Winding: Process Optimisation, Thesis, University of Birmingham, Dec. 2012, pages 70 to 73 or in A. Miaris, Experimental and Simulative Analysis of the Impregnation Mechanics of Endless Fiber Rovings, IVW-Schriftenreihe, Band 102, 2012, pages 6 to 13. Miaris further describes on pages 94 and 95 a ring winding head having a plurality of feeding arms for producing a pressure tank.

Further devices for filament winding and filament winding processes are disclosed, for example, in US-A 2007/0221316, WO-A 2016/183073 Z r US 6096164 A, US 2005/247396 A1 or KR-B 101906498.

WO-A 2016/169531 describes a process for particularly producing tailgates for vehicles by winding impregnated fibers around a tube. For winding, rotary disc rings are used which rotate around the tube.

Generally it is a disadvantage that producing composite components comprising at least one wound fiber reinforced polymer layer needs long cycle times and further that using the known devices for producing the composite components does not allow a fully automatized production. The cycle time of the whole production process involves the time to produce the liner including post treatment, to deliver the liner to a filament winding station, to apply fiber reinforced polymer layers, to transfer the liner with the fiber reinforced polymer layers thereon to a curing station, to cure the polymer of the polymer layers, to install mountings, to execute post treatment steps and to check the quality which may involve pressure tests. In the following description, cycle time in particular refers to the time for attaching the fiber structure.

Therefore, it is an object of the present invention to provide a device and a process for producing composite components comprising at least one wound fiber reinforced polymer layer which has shorter cycle times and which allows for a fully automatized production.

This object is achieved by a device for producing composite components comprising at least one wound fiber reinforced polymer layer, comprising:

- a support with a first holding device and a second holding device for mounting a liner in between, wherein the first and the second holding device are established such that the liner can rotate around a central rotation axis which extends through the first holding device and the second holding device, and
- at least two movable arms for feeding a fiber structure,

wherein the support is established such that the liner can be moved axially parallel to the central rotation axis and each movable arm for feeding the fiber structure is a robotic arm which comprises at least two joints which each allow bending and twisting.

Axially movement of the liner allows for a simplified reception of the liner in the support. Further, the movable arms for feeding a fiber structure being established such that they can be moved perpendicular to the central rotation axis allows an automatic start of the winding process as by the movement of the movable arm for feeding the fiber structure, the start of the thread can be moved to the liner by the movable arm which allows automated start of the winding process.

In the context of the present invention, the possibility of the axial movement of the liner parallel to the central rotation axis does not exclude a movement in any other direction. Particularly, it is preferred if the liner can be tilted with respect to the central axis, for example by an angle from 0° to 35°, more preferred form 0° to 25° and in particular from 0° to 15°. This allows a more precise application of the fiber structure in the dome sections of the liner.

The device for producing the composite component may comprise only two movable arms for feeding the fiber structure. However, to reduce the cycle time for producing one composite component it is preferred that the device for producing the composite components comprises more than two movable arms for feeding a fiber structure. Preferably, the device for producing composite components comprises 2 to 12 movable arms for feeding the fiber structure, more preferred 3 to 10 movable arms for feeding the fiber structure and particularly 3 to 8 movable arms for feeding the fiber structure. During the winding process, the fiber structures from each movable arm for feeding the fiber structure can be applied simultaneously on the liner and thus, for example, for applying the same number of fiber layers doubling of the number of movable arms for feeding the fiber structure results in halving the cycle time and tripling the number of arms for feeding the fiber structure results in reducing the cycle time to one third.

In a winding process it is possible to apply the fiber structure on the liner and to impregnate the fibers after being wound on the liner with a matrix material or to firstly impregnate the fiber structure and to either apply the impregnated fiber structure directly on the liner (wet filament winding) or to apply the impregnated fiber structure with a time delay (dry filament winding with towpregs). It is also possible to apply the fiber structure as a combination of reinforcing fibers and thermoplastic fibers which are used as matrix material. Further, it is also possible to apply impregnated fibers on the liner and to apply additional matrix material after the application of the impregnated fibers is finished.

Preferably, the fiber structure is impregnated directly before being applied on the liner. For impregnating the fiber structure, it is possible to feed impregnated fibers to the movable arms for feeding the fiber structure. However, it is preferred that each movable arm for feeding the fiber structure comprises a device for impregnating the fiber structure. Such a device for impregnating the fiber structure may, for example, comprise a tube through which the fiber structure runs and which contains the matrix material. While running through the matrix material containing tube, the fiber structure is impregnated with the matrix material. However, this kind of device for impregnating the fibers has the disadvantage that in a fast process air bubbles may form in the matrix material in the tube which may be entrained with the fiber structure.

At that positions where air bubbles are on the fiber structure, the fiber structure is not sufficiently impregnated with the matrix material which may lead to defects in the composite component.

To avoid forming of blowholes in the composite component it is preferred to use a device for impregnating the fiber structure which allows removal of the air pressed out of the fiber structure during impregnation. Such a device for impregnating the fiber structure for example comprises a bath for receiving the matrix material, a deflection unit for pressing the fiber structure into the bath and a draining unit. A respective device for impregnating the fiber structure is described, for example, in WO-A 2018/036790.

Using a bath into which the fiber structure is pressed by the deflection unit has the additional effect that due to the pressure of the deflection unit on the fiber structure air is pressed out of the fiber structure and the fiber structure can be fully impregnated with the matrix material. Further, it is possible to refill the bath during operation of the device for producing the composite component which allows continuing operation which needs not to be interrupted to refill matrix material. The matrix material thereby can be filled automatically into the bath for example by pump and a tube and pumping the matrix material from a central supply through the tube into the bath.

To remove excess material from the fiber structure, it is further possible to provide a wiper to wipe off the excess material. However, it is particularly preferred not only to remove excess material from the fiber structure but to adjust the fiber content by volume. For adjusting the fiber content by volume, the device for impregnating the fiber structure preferably comprises a device to adjust the fiber content by volume. The device for adjusting the fiber content by volume may be, for example, the wiper for wiping off excess material. To adjust the fiber content by volume using the wiper for wiping off excess material, the pressure is adjusted with which the fiber structure is pressed on the wiper.

Alternatively, for adjusting the fiber content by volume of the matrix material it is possible to use a device as described for example in WO-A 2019/025439 which comprises at least one opening through which the impregnated fibers are guided and each opening at the minimum opening cross section thereof is dimensioned such that so much matrix material is removed from the impregnated fiber structure that the desired fiber content by volume is achieved.

For allowing reuse of the matrix material wiped off the fiber structure, the device for impregnating the fiber structure comprises the draining unit. In the draining unit the excess matrix material which is wiped off the fiber structure or the matrix material which is wiped off the fiber structure for adjusting the fiber content by volume is collected and recycled into the bath. For this purpose, if the wiper for removing excess matrix material or the device for adjusting the fiber content by volume is placed directly behind the bath for impregnating the fiber structure, the draining unit comprises an inclined surface onto which the matrix material, which is wiped off the fiber structure, drips and then flows back into the bath.

It is important that the device for impregnating the fibers allows an efficient removal of excessive resin to make sure that the fibers can be applied to the liner without excessive resin dripping from the fibers. Unintended dripping of matrix material leads to a contamination of movable arms, of holding devices which require production stops to clean these devices. Furthermore dripping of matrix material from fibers could cause an uneven material distribution on the liner and an inferior product quality.

Besides using a device for impregnating the fibers comprising a bath for the matrix material and a deflection unit by which the fiber structure is pressed into the bath containing the matrix material, it is also possible to use a device for impregnating the fiber structure which comprises a porous material that is soaked with the matrix material, and a metering unit for metering matrix material into the porous material, wherein a unit is comprised by way of which the fiber structure can be pressed against an end face of the porous material, or wherein the porous material is received in a sleeve and the fiber structure can be guided through the porous material in the sleeve. Such a device for impregnating the fiber structure is described, for example, in WO-A 2019/115587.

To control the viscosity of the resin, the device for impregnating the fibers may optionally comprise a temperature control. For example the device for impregnating the fibers may have channels or a double jacket at the bottom side through which a medium for heating or cooling can flow. Such a medium for heating or cooling can be, for example, a temperature-control liquid of a thermostat. It is preferred that the temperature of the resin inside the device for impregnating the fibers is kept in a range between 15°C and 30°C. In special cases where highly viscous resins, usually resins having a viscosity of more than 1500 mPas at 23°C, are used, the target temperature in the bath may be in the range from 30°C to 60°C.

To avoid curing of the matrix material on the fiber structure between the device for impregnating the fiber structure and the application of the impregnated fiber structure on the liner, it is preferred to keep the distance between the device for impregnating the fiber structure and the liner as short as possible. For this purpose, it is preferred to arrange a device for impregnating the fiber structure on each movable arm for feeding the fiber structure. Particularly preferably, at least one device for impregnating the fiber structure is placed at an end of each movable arm for feeding the fiber structure which can be moved perpendicular to the central rotation axis. The end of the movable arm for feeding the fiber structure which can be moved perpendicular to the central rotation axis is that part of the movable arm for feeding the fiber structure which is closest to the liner. Therefore, by placing the device for impregnating the fiber structure on this end of the movable arm for feeding the fiber structure, the distance between the device for impregnating the fiber structure and the liner is as short as possible.

Particularly if a device for impregnating the fiber structure is used which comprises a bath for the matrix material and which is not tightly closed, it is preferred that the movable arm for feeding the fiber structure is established such that the device for impregnating fibers keeps a horizontal orientation independently of the position of the end of the movable arm for feeding the fiber structure. By keeping the horizontal orientation it is avoided that matrix material may leak from the bath, even in case of fast movements of the movable arm which may cause movements of the liquid matrix material inside the device for impregnating the fiber structure. In this case a high matrix material filling level is advantageous. It is further advantageous to keep the horizontal direction if the device for impregnating the fiber structure is not completely filled with the matrix material but contains the matrix material and a gas phase above the matrix material. In this case, when the bath is tilted it may happen that the fiber structure is no longer pressed into the matrix material but the matrix material is at a place in the device for impregnating the fiber structure where the fiber structure is not guided along due to the tilted position of the device for impregnating the fiber structure.

The matrix material may be a one component resin or a two component or a three component resin. Preferably, the matrix material is a two component resin. If a two component resin is used, both components of the two component resin are mixed and metered into the device for impregnating the fibers. In case of a three component resin, two components are mixed and metered whereas the third component is directly metered into the blend of the first two components. Mixing can be executed for example by low pressure mixing with a static or dynamic stirrer. Alternatively, mixing can also be achieved by a high pressure process. Standard commercial equipment for mixing and metering a two component resin or three component resin can be used and is well known in the art. Such equipment for mixing and metering usually comprises a mixing section and a mixing head through which the mixed two component resin is metered.

To avoid blocking of feed lines and to reduce premature polymerization to a minimum, it is particularly preferred that the mixing head is positioned in close proximity, particularly closer than 1 meter, to the device for impregnating fibers. Particularly preferably, the resin outlet of the mixing head is directly connected to the device for impregnating the fibers.

Preferably, the resin is metered continuously into the device for impregnating the fibers as long as fibers are wound on the liner. During an unplanned interruption of winding the fiber structure and after the application of the fiber structure is completed, dosing of resin is discontinued. Since the inventive device allows a fast winding process and, if automated, a fast positioning of the composite component into a curing station and taking a new liner from a supply, it is not necessary to disconnect the mixing head and to dismantle and clean the devices for impregnating the fibers manually. Applying the fiber structure on the next liner may resume without any cleaning of the devices for impregnating the fibers or optionally, the devices are flushed with a cleaning liquid prior to the beginning of applying the fiber structure on the next liner.

For facilitating winding the impregnated fibers on the liner, particularly in case the impregnation device is placed at that end of the movable arm for feeding the fiber structure which is movable perpendicular to the central rotation axis, it is preferred to arrange the device in such a way that the support and the movable arms for feeding the fiber structure are arranged such that the central rotation axis runs in an angle in the range from 65° to 90° with respect to the horizontal. More preferred, the central rotation axis runs in an angle in the range from 75° to 90° and particularly in a range from 85 to 90°. By such an orientation of the central rotation axis, the end of the movable arms for feeding the fiber structure which can be moved perpendicular to the central rotation axis is moved horizontally when the end of the movable arm for feeding the fiber structure moves. This facilitates the production of the liner as particularly for using more than one movable arm for feeding the fiber structure all movable arms can easily be arranged around the winding position without considering whether the movable arm is positioned above or below the liner on which the fiber structure is wound.

"Horizontal" in context of the present invention means that line which is defined by the tangent on the geographical horizon. Particularly if the support is not only movable parallel to the direction of the central rotation axis, the central rotation axis has the above defined orientation when the liner is in the position in which the fiber structure is wound on the liner. Accordingly all positions which relate on the central rotation axis also are based on the position of the central rotation axis during winding the fiber structure.

The fiber structure for producing the composite component can be provided by a central supply from which each of the movable arms for feeding the fiber section is provided with the fiber structure. However, this has the disadvantage by using a plurality of movable arms for feeding the fiber structure which are placed symmetrically around the winding position that the fiber structure has to be guided to each of the movable arms for feeding the fiber structure which needs a complex design for supplying the fiber structure to each of the movable arms for feeding the fiber structure. Therefore, it is preferred that each movable arm for feeding the fiber structure is assigned to a supply for a fiber structure. The supply for the fiber structure for example comprises a reel from which the fiber structure is unwound. It is preferred to use devices to control the fiber tension for each supply of the fiber structure. Such devices are well-known in the textile industry. To wind an impregnated continuous fiber on the liner it is further preferred, if each supply for the fiber structure comprises a unit for joining two ends of the fiber structure, the end of the fiber structure which currently is wound on the liner and the start of a new fiber structure. Thereby, the new fiber structure usually is wound on a further reel and therefore, the supply for the fiber structure also comprises a support for the further reel.

Joining the two ends of the fiber structure can be carried out according to each process known to a skilled person. However, to achieve a smooth connection, it is particularly preferred to connect the ends of the two fiber structures by splicing as described for example in H. Große-Rechtien, "Entwicklung eines Verfahrens zur Herstellung von hochdrpierfähigen Carbonfaser-Halbzeugen aus Kurzspulen, Abschlussbericht über eine Machbarkeitsstudie, gefördert unter dem AZ: 31143 von der Deutschen Bundesstiftung Umwelt, November 2014, Chapter 2.3.1, pages 23 to 28. This process allows for an automatized change of rovings.

For an automatized process it is further necessary that after finishing the application of the fiber structure for producing a composite component, the fiber structure is cut close to the composite component and the ends of the fiber structure are attached on the composite component. The fibers preferably are cut at a position after they have left the resin bath. This allows a fast start of winding the next composite component because dismantling of the resin bath for cleaning and repositioning of every single fiber in the device for impregnating the fibers is not necessary.

The cutting device may be positioned at the end of each movable arm or as an alternative it may be positioned at the holding device for the liner. If the cutting device is positioned at the holding device for the liner, for cutting, the movable arm is executing movements which guides the impregnated fiber to the cutting device by which the impregnated fiber is cut. If one cutting device is provided for each movable arm, each movable arm is moved to the respective cutting device. On the other hand, it is also possible to provide only one cutting device for more than one movable arm. In this case, all movable arms for feeding the fiber structure are moved in sequence to that cutting device which is intended for cutting the fiber structures fed by those movable arms.

The cutting device can be any suitable device which can be used to cut the fiber structure. Respective cutting devices for example are hydraulically or pneumatically operated scissors or knives. Further, all cutting devices which can be operated automatically and by which the fiber structure can be cut and which are known to a skilled person can be used. For cutting the fiber structure after finishing the winding process, it is particularly preferred, if each movable arm for feeding the fiber structure comprises a cutting device for cutting the fiber structure. The device for cutting the fiber structure particularly preferably is positioned close to the end of the movable arm for feeding the fiber structure such that the fiber structure can be cut close to the composite component.

Further, to achieve enough space for removing the composite component from the winding position it is necessary that the movable arms for feeding the fiber structure are moved to a position in such a distance from the composite component that the composite component can be removed without touching the movable arms for feeding the fiber structure. Further, when the movable arms for feeding the fiber structure are in this position, it is possible to place a new liner into the position for winding the fiber structure.

An automatized process further affords that after placing a new liner into the position for winding the fiber structure, the fiber structure is attached to the liner. For this purpose, for example pincers are positioned at the holding device for the liner. At the start of the winding process, the movable arms carrying the impregnated fibers are moving towards the position of the pincer. With the movement of the arm, the fibers are threaded into the pincer and then wound around the holding device. In this way the fibers can be attached automatically to the liner. In a preferred embodiment, the pincers are attached to a single-use sleeve which is picked up by the movable arm with the support for holding the liner before picking up the liner from the liner storage.

As an alternative, for attaching the fiber structure on the liner that each movable arm for feeding the fiber structure may comprise a pincer for placing the fiber structure on the liner. The pincer thereby can be any pincer which allows for grabbing the fiber structure and placing the fiber structure on the liner. A further advantage of using a pincer is that after finishing the winding process, the fiber structure can be placed to a desired position on the liner and be fixed in that position.

For a fully automatized production process it is necessary that the liner can be fetched from a liner supply, moved into the winding position and placed into a unit for impregnating the fibers if a fiber structure is wound on the liner which was not impregnated with a matrix material or a curing unit if the fiber structure wound on the liner was impregnated with matrix material. To move the liner into the winding position and after winding the fiber structure to a following working unit, for example for impregnating the fiber structure or for curing the matrix material, it is preferred that the support is mounted to a movable arm which allows for taking a liner from a liner supply, moving the liner into a position for applying the fiber structure, and placing the liner after application of the fiber structure to a following working unit, for example a curing station.

Like the movable arms for feeding the fiber structure, it is particularly preferred if the movable arm on which the support is mounted also is a robotic arm. To allow the desired movements, it is preferred if the movable arm on which the support is mounted comprises at least two joints which each allow bending and twisting like the movable arms for feeding the fiber structure. Particularly preferably, each robotic arm comprises at least three joints which allow bending and twisting. Further, the joints preferably are placed at different positions on the robotic arm. Due to the at least two joints, preferably at least three joints, the arm can be moved in any direction and the movable arms are controllable with a high precision.

For achieving a smooth surface of the composite component the curing station for example may comprise a mold into which the liner with the applied impregnated fiber structure is placed for curing. Depending on the matrix material used for impregnating the fiber structure, the curing station may additionally or alternatively comprise a heating element for heating the liner with the applied fiber structure. If the curing station comprises a mold, the heating element for example is an electrical heating of the mold.

In the curing station it is also possible to consolidate a fiber structure containing a thermoplastic matrix.

For an automated production of the composite component comprising at least one fiber reinforced composite layer a process is carried out which comprises:

(a) taking a liner from a liner supply with the first holding device and the second holding device of a device as described above;

(b) moving the liner into a position for applying a fiber structure;

(c) attaching the fiber structure on the liner

(d) applying the fiber structure on the liner by means of the at least two movable arms for feeding the fiber structure, wherein the fiber structure is impregnated with a matrix material in a device for impregnating the fiber structure before being applied on the liner, the liner being rotated around the central rotational axis and being moved axially parallel to the central rotational axis during application of the fiber structure to apply the fiber structure in a predefined pattern on the liner;

(e) cutting each fiber structure after application of the fiber structure is finished;

(f) placing the liner with the applied fiber structure to a curing station

(g) optionally injecting a resin into a mold of the curing station in which the liner with the applied fiber structure is placed to produce a surface coating layer

(h) curing the matrix material and the resin, if injected.

This process allows for a fully automatized production of the composite components. By using the inventive device with the support comprising the first holding device and second holding device being mounted on a movable arm, the liner can be fetched from a liner supply and being moved into the position in which the fiber structure is applied on the liner. Further, the liner with the applied fiber structure afterwards can be placed into a following working unit, for example a curing station. For fetching the liner, the support is moved into a position such that one holding device is placed on one end of the liner and the second holding device on the opposite end of the liner. Afterwards the holding devices are moved into a position in which the liner is clamped between the first and the second holding device. The liner thereby is oriented such that the points on which the holding devices contact the liner each lie on a central axis of the liner which will coincide with the central rotation axis after the liner is moved into the position in which the fiber structure is applied on the liner. The attachment of the holding devices and the liner preferably is achieved without manual mounting steps or the manual use of tools.

It is a further advantage of the winding process using the inventive device for producing a composite component that the composite component can be produced with a winding velocity of more than 1.5 m/s without an increased formation of defects, wherein the winding velocity relates on the velocity of the impregnated fibers which are applied on the liner.

Particularly for producing fiber reinforced tanks using rovings as impregnated fibers, the velocity for producing the fiber reinforced tank further depends on the amount of rovings which can be applied simultanously. The inventive device for producing the composite component allows application of 1 to 12 rovings, preferably 2 to 12 rovings, with each movable arm. An application of more than 12 rovings with one movable arm may result in thickening in the dome section of the liner.

To achieve an optimum in product quality and production velocity, it is particularly preferred to apply up to 12 rovings per movable arm and use 3 to 8 movable arms for applying the impregnated fibers on one liner.

If a support is used which only can be moved parallel to the central rotation axis, the support preferably is moved to a position in which the liner can be placed between the fist and the second holding device. After placing the liner into the correct position, also in this embodiment the holding devices are moved into a position in which the liner is clamped between the first and the second holding device and afterwards the support with the liner is moved parallel to the central rotation axis into the position in which the fiber structure is wound around the liner.

After being placed into the position for applying the fiber structure, each fiber structure is attached on the liner and afterwards the liner starts to rotate around the central rotation axis by which the fiber structure is wound around the liner. During winding the fiber structure on the liner, the support moves parallel to the central rotation axis by which also the liner is moved parallel to the central rotation axis. By this movement of the liner it is possible to lay the fiber structure in a desired pattern on the liner. The pattern of the fiber structure thereby depends on the rotational speed of the liner and the speed and direction of the movement parallel to the central rotation axis.

The fiber structures for example can be arranged such that a continuous fiber reinforced layer produced by winding the fiber structures around the liner comprises at least one first layer in which the fiber structure for example is wound perpendicular to the central rotation axis and at least one second layer in which the fiber structure is wound around the liner in an angle between 10° and 80° with respect to the central rotation axis. Preferably, the fiber structure of the at least one second layer is wound around the liner in an angle in the range from 30° to 60° with respect to the central rotation axis. However, it is also possible to wind the fiber structures of the first and the second layers in the same angle with respect to the central rotation axis or in different angles where in each layer the angle is in the range from 10 to 80° with respect to the central rotation axis and the angle between the fiber structures in each layer is in the range from 5 to 90°.

Common patterns of fiber structures such as "hoop winding", "helical winding" and "polar winding" are found for example in T. Sofi, S. Neunkirchen, R. Schledjewski, Advanced Manufacturing: Polymer & Composite Science 2018, Vol. 4, No. 3, pages 57-72. Furthermore it may be necessary to include so called "connector winding" which brings the fibers from the position after completing the previous layer to the starting point of the next layer. All known fiber structure patterns can be combined to create the fiber structure.

By winding the first and the second layer in which the fiber structure is wound in different angles around the liner with respect to the central rotation axis, for example perpendicularly to the central rotation axis in each first layer and an angle between 10° and 80° in each second layer, essentially isotropic properties in tensile strength, compression strength and flexural strength can be achieved based on the angles in which the fiber structures are wound around the liner.

Besides applying at least two layers, which differ in the angle in which the fiber structure is applied to the liner, it is also possible to apply at least two fiber reinforced layers with the same orientation of the fiber structure in each layer or to apply only one layer on the liner.

For achieving essentially isotropic properties, it is further preferred, if in the second layer continuous fibers are wound around the liner in such a way that fiber structures lying above another enclose an angle between 20° and 160°, preferably between 40° and 140° and particularly between 60° and 120°. To wind the fiber structures around the liner in such a way that they enclose an angle between 20° and 160° the support with the liner is moved parallel to the central rotation axis such that that the liner is moved from a first position where the feeding point of each movable arm for feeding the fiber structure is on one end of the liner to a second position where the feeding point of each movable arm for feeding the fiber structure is on the opposite end of the liner while the liner rotates around the central rotation axis for achieving fiber structures being wound around the liner in a first angle and to move the liner back from the second position into the first position to wind the fiber structures in a second angle which is aligned in the opposite direction to the angle of the moved of the liner from the first position into the second position. The angle of the fiber structure with respect to the central rotation axis of the liner thereby depends on the rotational velocity of the liner and the velocity of the support moving the liner from the first into the second position or from the second into the first position. The slower the liner rotates and the faster the liner moves parallel to the central rotation axis, the larger is the angle of the fiber structure with respect to the central rotation axis.

By repeating the movement from the first position into the second position and back from the second position into the first position, usually a woven pattern of the fiber structure is formed.

To achieve a fiber reinforced polymer layer, it is particularly preferred that the fiber structure is impregnated with a matrix material before being wound around the liner. For impregnating the fiber structure preferably a device for impregnating the fiber structure as described above is used.

The fiber structure to be wound around the liner preferably is taken from a stock which is assigned to each movable arm for feeding the fiber structure, the stock for example being a roller on which the fiber structure is wound. The fiber structure which is wound around the liner is an "endless structure", that is to say the fiber structure may in principle have an unlimited length and a finite length results only from the necessity that arbitrarily long fiber structures cannot be contained in the stock. Preferably, the fiber structures are configured in such a way that, when the end of one structure is reached, a subsequent new structure can be connected straightforwardly to the previous structure for example by knotting when using endless fibers or preferably by splicing as described above when using rovings as a fiber structure. Fiber structures which may be used in the process are, for example, nonwovens, fabrics, knits, individual fibers or rovings. It is preferred for the fiber structure to comprise rovings.

The fiber structure preferably contains carbon fibers, glass fibers, aramid fibers, synthetic fibers, for example polymer fibers, or natural fibers like wool, cotton, hemp or flax. The fiber structure may contain only one type of fibers or different types of fibers. The selection of the fibers is dictated, in particular, by the mechanical requirements for the component. It is, however, conventional not to use different fibers, but only fibers of one material. Particularly preferably, the fiber structure contains carbon fibers, glass fibers or aramid fibers.

The matrix material with which the fiber structures can be impregnated may be any desired thermoplastic polymer or contain reactants for the production of a thermosetting or thermoplastic polymer, in which case the reactants must be present in liquid or dissolved form or are present as thermoplastic fibers. If the matrix material is a thermoplastic polymer, then this is for example present as a melt. As an alternative, however, it is also possible for the matrix material to contain reactants for production of the polymer in the form of a monomer solution, oligomer solution, monomer melt or oligomer melt, which then react to form the desired polymer. If the fiber structure is intended to be impregnated with a thermosetting polymer, the matrix material always contains reactants for production of the desired thermosetting polymer. In addition, the matrix material may contain conventional catalysts. Reactants for production of the polymer are generally monomers or oligomers of which the polymer is made up. If a thermosetting polymer is intended to be produced, the reactants may also already be present as polymers which react further to form the thermoset.

In order to adjust the properties of the composite component, the matrix material may furthermore contain additives. There are for example plasticizers, impact strength modifiers, UV stabilizers, flame retardants, viscosity modifiers, adhesion promoter, dispersing agents, surfactants and any other desired additives known to a person skilled in the art which are conventionally used for the modification of polymers.

Particularly preferably, the matrix material is selected from unsaturated polyester resins (UP), vinyl esters (VE), epoxy resins (EP), polyurethanes (PUR), phenolic resins or caprolactam resins or combinations or reagents thereof. The term polyurethane comprises well-known structural units achievable with urethane raw materials such as polyisocyanurate, polyurea, polyamide, allophanate, biuret, uretdione, carbodiimide or polyoxazolidone.

The liner used in the process depends on the composite component to be produced. If the composite component is a pressure tank, the liner usually is a stiff liner which is made of a polymer and has the form of the inner wall of the pressure tank to be produced. After finishing the production of the composite component in this case the liner form the inner wall of the pressure tank. The liner for example can be produced by blow molding or by rotational molding. If the liner is made of a polymer, the polymer may be the same as used as matrix material. If the liner shall have particular properties, it is further possible to use a polymer which differs from the polymer used for the fiber reinforced layer and has the desired properties. If different polymers are used for producing the liner and as matrix material, it is preferred to use polymers which can be tightly connected to achieve a stable composite component. If the polymer used as matrix material would not adhere to the material of the liner, it is further possible to apply a primer on the liner which supports adhesion of the matrix material on the material of the liner or to apply an adhesive on the liner before starting winding the fiber structure on the liner.

Besides being made of a polymer material, the liner also can be made from ceramic, glass or a metal, for example steel, aluminum or a nickel base alloy, wherein steel liners are very common. However, to achieve a composite component, particularly a pressure tank which is lightweight, it is preferred to use a liner made of a polymer material, particularly a thermoplastic polymer. Preferred polymer materials for the liner are polyethylene, polyamide and polyurethane. The liner material is selected based on the permeability regarding the gases to be stored in the vessel which should be as low as possible.

As an alternative to the stiff liner as described above, the liner also can be an inflatable bladder. The bladder may contain subsets of chambers which can be inflated separately. In the fully inflated state, the bladder has the shape of the inner surface of the composite component and is attached to the mountings which allow the inflatable bladder to be fixed between the first holding device and the second holding device. After the fully inflated inflatable bladder is taken from the supply, it is moved into a position for applying the fiber structure. After the fiber structure has been attached and the fiber structure has been applied and each fiber structure has been cut, the inflatable bladder with the applied fiber structure is moved to a curing station. After curing the matrix material, the bladder is deflated and removed from the fiber structure by removing mountings attached to at least one of the holding devices. The bladder is inspected, cleaned and reused. One example for the use of an inflatable bladder for the fabrication of complex and large composite parts can be found for example in US-A 9,669,589.

To achieve a composite component free from defects, it is further preferred to clean the liner before starting to apply the fiber structure. For cleaning the liner it is for example possible to blow off dust by using pressurized air. Further, particularly to remove traces of grease or fat or other impurities which adhere on the surface of the liner, the liner can be washed using a solvent and/or water with surface-active agents. After washing the liner with solvent or with surface-active agents, it is preferred to rinse with deionized water and to dry the liner before starting winding the fiber structure. Cleaning the liner may take place either in a cleaning unit into which the liner is passed by using the support with the first and second holding devices or before the liner is placed into the supply from which the liner is taken before placing into the position for winding the fiber structure. If the liner is cleaned before being placed into the supply for the liners, it is particularly preferred to blow off dust before starting applying the fiber structures.

To prepare the liner for production, it is further possible to treat the liner with a flame treatment or corona treatment.

To achieve a defined surface and to avoid fibers stick out of the surface of the composite component, it is preferred to move the composite component to a predefined position before cutting the fiber structure. For cutting the fiber structure it is further preferred to move the arms for feeding the fiber structure as close as possible to the liner to achieve an end of the fiber structure sticking out of the liner which is as short as possible. If the movable arm contains a pincer, it is further preferred to lay the end of the fiber structure on the liner by means of the pincer. This allows an automatized production of composite components without fibers sticking out of the surface of the component.

After the fiber structures have been cut off, the matrix material with which the fibers are impregnated is cured. If the fiber structure was not impregnated before being wound on the liner, the fiber structure is impregnated after finishing winding. Further it is possible to apply an additional layer of matrix material on the composite component even in case the fiber structure was impregnated before being wound on the liner. In the second case, before curing the matrix material, the fiber structures are impregnated or the additional layer of matrix material is applied.

To achieve a smooth surface it is further possible, to apply an additional polymer layer on the fiber reinforced layer after curing. Alternatively it is also possible to use a curing station with a mold into which the liner with the impregnated fiber structure applied thereon is placed. The mold has the outer form of the composite component to be produced. For a smooth surface or for applying an additional layer having particular properties, for example a particular surface appearance, smoothness, robustness and/or impact resistance, it is possible to inject polymer material into the mold which forms the additional layer on the composite component.

For increasing the throughput of the device for producing the composite component, it is preferred that the curing station comprises several units for receiving the liner with the fiber structure applied thereon, the units being movable such that after a liner with the fiber structure being applied thereon is placed into a unit, the unit is moved to another position and a new unit for receiving a liner with the fiber structure being applied thereon is moved into the position for receiving the liner with the fiber structure being applied thereon. As soon as winding the fiber structure on the liner, the liner is placed in the unit and the support can fetch a new liner for producing the next composite component.

After curing of the matrix material is finished or after curing has been continued so far that the matrix material no longer can flow, the composite component is removed from the curing station.

To achieve a smooth surface and to avoid matrix material flowing down the liner with the fiber structure being applied thereon and forming lugs, it is preferred that the liner with the applied fiber structure rotates around a horizontal rotation axis during curing the matrix material. This is particularly preferred if the liner with the fiber structure applied thereon is not placed into a mold for curing.

Besides for producing pressure tanks, the inventive device and process can be used to produce any composite component having at least one wound fiber reinforced layer, for example poles, posts, water heaters or storage tanks for different gases. As for pressure tanks, the liner may remain in the finished composite component or alternatively, if the composite component has a shape which allows for removing the liner, also a mandrel can be used which is reusable for producing a new component. If a reusable mandrel is used, the mandrel preferably is removed from the composite component after curing the matrix material. As it is possible to produce a new composite component during curing of the previously composite component, after removing, the mandrel is placed in a supply from which the mandrel is fetched by the support with the first and second holding devices. If a reusable mandrel is used as liner, it is further preferred to clean the mandrel before starting winding the fiber structures for a new composite component.

Illustrative embodiments of the invention using the example of producing a pressure tank are shown in the figures and explained in more detail in the following description.

In the figures:

Figure 1          shows a process for producing a pressure tank comprising a fiber reinforced layer;

Figure 2          a cutting device and a sleeve with pincers for attaching impregnated fibers on the liner;

Figures 3 to 6    show process steps of a process for producing a pressure tank comprising a fiber reinforced layer;

Figure 7          shows a device for impregnating a fiber structure in the plan view

Figure 8          shows a sectional view of the device for impregnating a fiber structure;

Figures 9 and 10  show a device to adjust the fiber content by volume in a closed and an opened position;

Figure 11         shows a side view of a device for impregnating a fiber structure with a device for mixing and metering the matrix material.

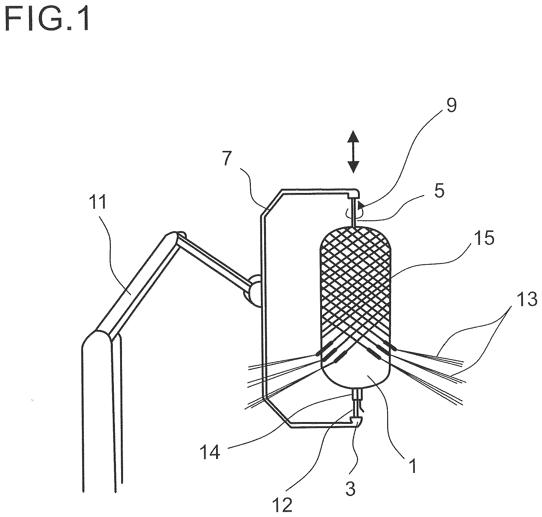

Figure 1 shows a process for producing a pressure tank comprising a fiber reinforced layer.

For producing a pressure tank, a liner 1 is fixed between a first holding device 3 and a second holding device 5. The first holding device 3 and the second holding device 5 are part of a support 7. The support 7 with the first holding device 3 and the second holding device 5 are designed in such a way that the liner 1 can rotate around a central axis 9 which extends through the first holding device 3 and the second holding device 5. To fix the liner 1 between the first and second holding devices 3, 5, it is for example possible to move the holding devices 3, 5 along the central axis 9 and to clamp the liner 1 between the first and second holding devices 3, 5. The holding devices 3, 5 in this case for example comprise a pin or a flat plate which presses on the liner when the liner 1 is fixed by the holding devices 3, 5 in the support 7.

The support 7 is mounted to a movable arm 11 which can move in such a way that the liner is moved parallel to the central axis 9. While the liner 1 is moved parallel to the central axis 9, a fiber structure 13 is attached on the liner 1. During attaching the fiber structure 13 to the liner 1, the liner rotates around the central axis 9. Simultaneously, the liner is moved back and forth parallel to the central axis 9. By this movement, the fiber structure 13 is wound around the liner 1. The fiber structure preferably comprises continuous fibers such that a woven pattern 15 is formed on the liner. To achieve a fiber reinforced polymer layer, the fiber structure 13 is impregnated with a matrix material, for example monomers or oligomers which form a polymer when cured or a molten thermoplastic polymer or fibers produced from a thermoplastic polymer.

For reducing the cycle times, the fiber structures 13 are applied at more than one position. The positions for applying the fiber structures 13 therefore preferably are in the same plane perpendicular to the central axis 9. Particularly preferably, the fiber structures 13 are applied at 3 to 8 positions, wherein at each position up to 12 fiber structures can be applied.

For cutting the fibers after finishing the application on the liner, it is preferred that a cutting device 12 is provided on the support, preferably on the first holding device 3 as shown here or on the second holding device 5. Further, a sleeve with pincers 14 is provided for attaching the fibers on the liner 1 on starting the winding process. The sleeve with pincers 14 preferably is a single use sleeve which is picked up by the movable arm 11 by one of the holding devices 3, 5 before picking up the liner 1. Particularly preferably, the sleeve with the pincers 14 is picked up from the same holding device 3, 5 on which the cutting device 12 is attached.

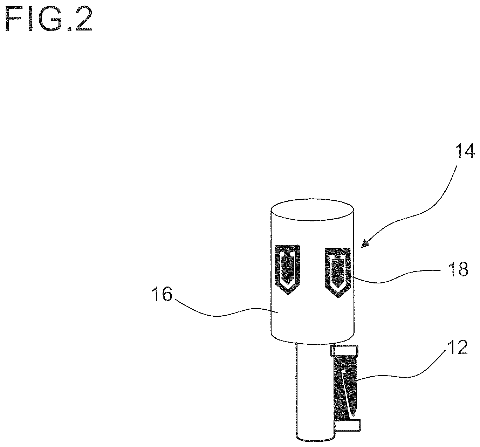

The cutting device 12 and the sleeve with pincers 14 are shown in more detail in figure 2.

For attaching impregnated fiber structures on a new liner, a sleeve 16 is used on which pincers 18 are attached. The sleeve 16 preferably is a single-use sleeve which is picked up by the first holding device 3 or the second holding device 5 of the movable arm 11 before picking up the liner 1. If a single-use sleeve is used, the fiber structures 13 also are wound at least partly around the sleeve 16 during the winding process and that part of the sleeve 16 which protrudes from the finished wound composite component is cut off.

The cutting device 12 is mounted on the first holding device 3 or to the sleeve 16, respectively, in such a way that after finishing winding the impregnated fiber structure on the liner, a device for feeding the impregnated fiber structure can be moved to the cutting device 12. The cutting device can be for example a knife or a blade. In this case, by moving the impregnated fiber structure on the knife or the blade, the impregnated fiber structure is cut. Due to the position of the cutting device 12 close to the liner, long fibers hanging from the liner after cutting are avoided.

To attach the fiber structure 13 on the liner 1, the fiber structures are moved toward the position of the pincers 18 by movable arms. With the movement of the movable arm, one fiber structure 13 is threaded into one pincer 18 and then the liner starts to rotate and the winding process starts.

Besides using a single-use sleeve, it is also possible to use a multi-use sleeve. However, even when using a multi-use sleeve it is preferred to pick-up the sleeve 16 before starting the winding process, to remove the liner with the sleeve 16 after finishing the winding process and use a new sleeve 16 with the next liner 1. After the winding process, the multi-use sleeve is removed from the liner with the wound fiber structure 13, optionally cleaned and then reused.

If it is possible to completely remove the fiber structure from the pincers 18 after finishing the winding process or during the winding process, it is further possible to mount the pincers 18 directly on the first holding device 3 or the second holding device 5. In this case it is not necessary to use a sleeve 16.

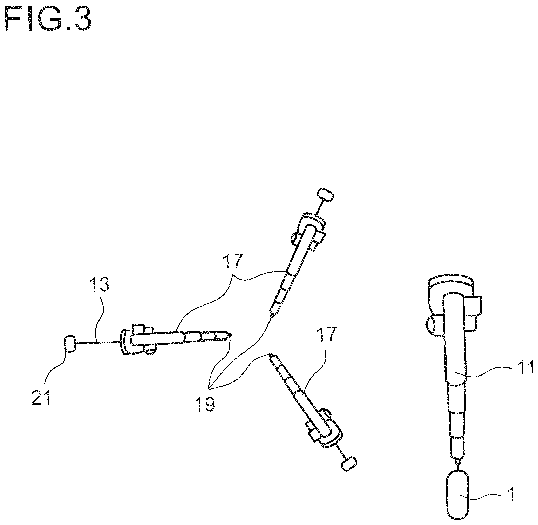

The steps for producing a pressure tank as composite component comprising at least one wound fiber reinforced polymer layer are shown in figures 3 to 6.

In a first step, which is shown in figure 3, the liner 1 is taken from a liner supply by the support 7 with the first and second holding devices 3, 5. The support 7 is mounted on the movable arm 11, preferably as shown here a robotic arm.

The device for producing the composite component shown in figures 3 to 6 comprises the robotic arm with the supply and three movable arms 17 for feeding the fiber structure. For feeding the fiber structure, the movable arms 17 are connected with feed points 19 for the fiber structure 13. The fiber structure 13 can be any fiber structure which can be used for producing the fiber reinforced polymer layer. The fiber structure for example may comprise single fibers or rovings. If rovings are used, it is possible to either wind the rovings around the liner 1 or to separate the fibers of the roving before winding the separated fibers on the liner.

The movable arms 17 for feeding the fiber structure are robotic arms which allow a precise positioning of the feed point 19 for the fiber structure with respect to the liner. Each movable arm 17 for feeding the fiber structure is connected with a supply 21 for the fibre structure 13. The fiber structure 13 is taken from the supply 21, runs along the movable arm 17 for feeding the fiber structure and through a device 23 for impregnating the fiber structure 13.

For taking the liner 1, the first and second holding devices 3, 5 each are placed on one side of the liner 1 and the liner 1 is fixed between the first and second holding devices 3, 5. For fixing the liner, no manual work or use of tools is necessary.

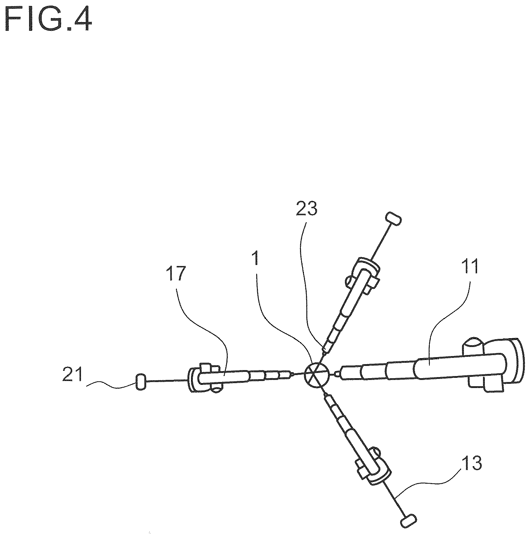

After the liner 1 is fixed between the first and second holding devices 3, 5, the liner 1 is moved with the movable arm 11 on which the support 9 is mounted into a position in which the fiber structures 13 are applied on the liner 1. This is shown in figure 4.

For applying the fibers, after the liner 1 is moved into the position for winding the fiber structure 13, the feed points 19 for the fiber structure are moved close to the liner 1 to fix the end of the impregnated fiber structure 13 on the liner. After the fiber structures 13 are fixed on the liner 1, the liner 1 starts to rotate and the fiber structure 13 is wound on the liner 1, wherein the liner 1 is moved parallel to the central axis as shown in figure 1.

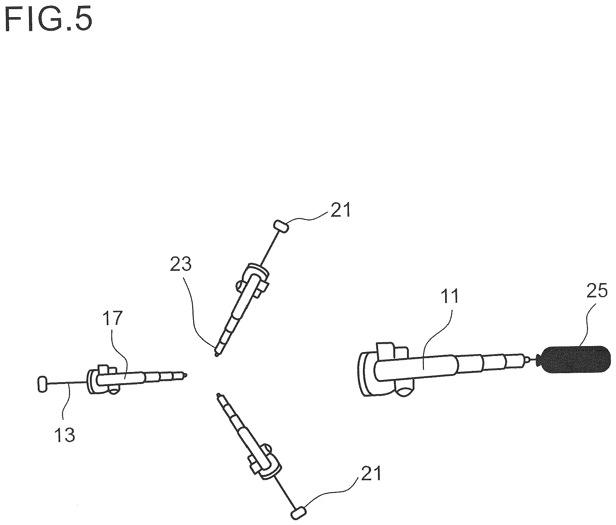

After finishing winding the fiber structure 13 on the liner, the wound fiber reinforced polymer layer is completed and the liner with the wound fiber structure applied on it is moved to a curing station. This is shown in figure 5. For moving the liner with the wound fiber structure 25 to the curing station, the movable arms 17 for feeding the fiber structure move away from the liner with the wound fiber structure 25. Afterward the movable arm 11 with the support rotates for bringing the liner with the wound fiber structure 25 to the curing station 27.

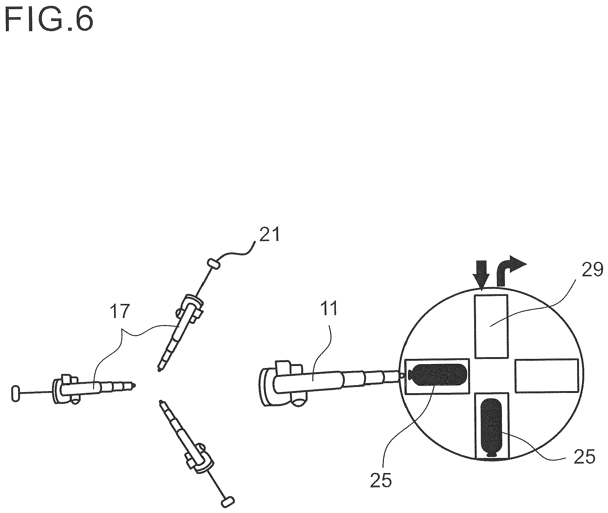

For continuous production of composite components and if curing lasts longer than winding the fiber structure 13 around the liner 1 it is preferred if the curing station 27 comprises a plurality of molds 29 in each of which one composite component can be cured. For an automatized production it is necessary that after placing one liner with wound fiber structure 25 into the mold 29, the next mold 29 is moved into a position in which the next liner with wound fiber structure 25 can be placed into the mold. For this purpose, the curing station particularly is in the form of a horizontal or vertical rotating table as shown in figure 6. To avoid formation of tears on the composite component, particularly for axially symmetrical components like pressure tanks, it is preferred that the composite component rotates around the symmetry axis during curing.

Optionally after placing the liner 1 with the wound structure 25 into the mold 29, a resin may be injected into the mold 29 to form a thin coating on the surface of the wound structure 25. The thin coating preferably has a thickness in the range from 0.1 mm to 5 mm. The resin may be an unsaturated polyester, a vinyl ester, an epoxy or a polyurethane. In a preferred embodiment the resin is a polyurethane. After injecting the polyurethane resin, it is cured in the mold 29.

After curing the fiber reinforced polymer layer and optionally the resin the composite component is removed from the mold. Removing also may take place before the polymer is fully cured. In this case the polymer must be cured to a condition in which the polymer precursor is no longer liquid and sticky.

If a sleeve 16 has been used to produce the composite component, for example a pressure vessel, it is removed after curing. At this stage other mountings such as valves are installed.

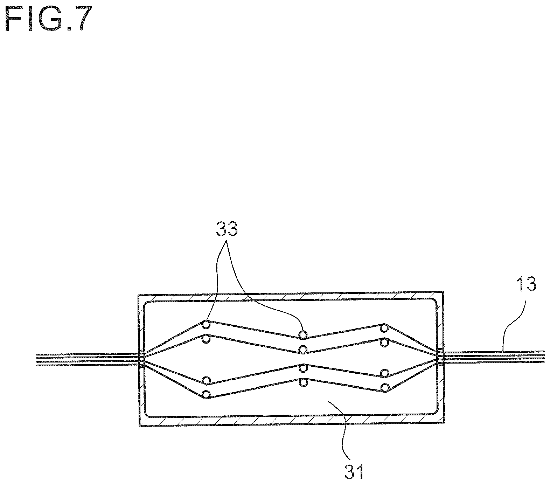

Figure 7 shows a device for impregnating a fiber structure in the plan view.

For impregnating the fiber structure, the fiber structure 13 is guided through a bath 31 which contains the matrix material with which the fibers are impregnated. If a number of fibers is fed into the device for impregnating the fibers preferably are separated and guided along deflection units 33. The deflection units 33 are placed in the bath in such a way that the fiber structures 13 are pressed by one deflection unit 33 against the neighboring deflection unit 33. This results in a zig-zag guiding of the fiber structure through the bath 31. Such a zig-zag guiding of the fiber structure 13 is particularly preferred if the fiber structure is in the form of flat fiber tapes or carbon fiber rovings. The deflection units 33 simultaneously act as wipers for adjusting the fiber content by volume.

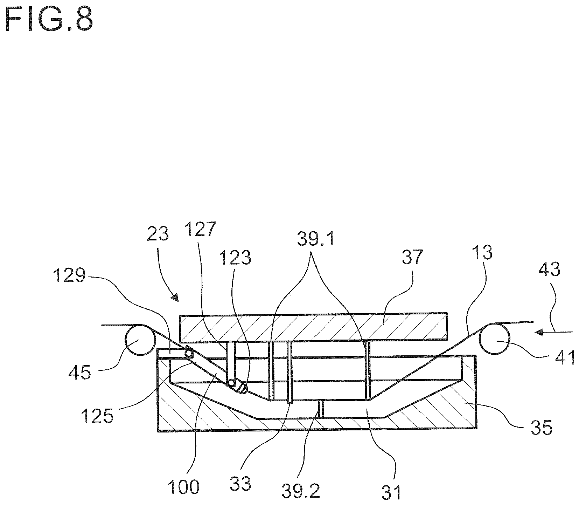

Figure 8 shows a sectional view of the device for impregnating the fibers;

The device 23 for impregnating the fibers preferably comprises a lower part 35 and a lid 37. The bath 31 having the matrix material with which the fiber structure 13 is impregnated is located in the lower part 35. In order for the fiber structure 13 to be as far as possible completely impregnated and for gas, in particular air, that is still contained in the fiber structure, to be expelled, wipers are additionally provided in the bath 31. The wipers herein, as is illustrated here, are preferably disposed above and below the fiber structure 13, wherein the wiping edges along which the fiber structure 13 is guided, are aligned such that the wipers 39.1 which act on the fiber structure 13 from above, press the fiber structure 13 onto the wipers 39.2, which act on the fiber structure 13 from below, and in a corresponding manner the wipers 39.2 that act on the fiber structure 13 from below push the fiber structure 13 against the wipers 39.1 that act on the fiber structure 13 from above. The pressure that acts on the fiber structure 13 and thus the effectiveness of the wipers 39.1, 39.2 for expelling the gas can be set by the height by way of which the wipers 39.1, 39.2 engage in one another.

The fiber structure 13 is guided by way of a deflection roller 41 from above into the bath 31. In order for the fiber structure 13 after the deflection roller 41 to be guided into the bath 31, a wiper 39.1 is first provided in the running direction 43 of the fiber structure 13, said wiper 39.1 acting on the fiber structure 13 from above. The fiber structure 13, after passing the deflection roller 41, is pushed into the bath 31 by way of the wiper 39.1 which acts on the fiber structure from above. The first wiper 39.1 which acts on the fiber structure 13 from above is adjoined by at least one wiper 39.2 which acts on the fiber structure 13 from below, and by a further wiper 39.1 which acts on the fiber structure 13 from above. Even further wipers can also be provided, wherein the last wiper in the running direction 43 of the fiber structure 13 is a wiper 39.1 that acts on the fiber structure 13 from above. The fiber structure 13 after the last wiper 39.1 is guided through a device for adjusting the fiber content by volume 100, said device by way of one side being submerged in the matrix material and by way of the other end, through which the fiber structure 13 exits the device for adjusting the fiber content by volume 100, lying outside the matrix material. Subsequent to the device for adjusting the fiber content by volume 100, the impregnated fiber structure is guided by way of a further deflection roller 45.

Instead of the deflection rollers 41, 45 which are illustrated here, it is also possible to use a bar which preferably has only rounded edges in at least that region in which contact with the fiber structure 13 takes place and is particularly a round bar.

In order for the fiber content by volume of the impregnated fibers to be set, the device for adjusting the fiber content by volume 100 in the embodiment illustrated here has a nozzle 123 and a duct 125. The nozzle has the minimal cross-sectional face which is dimensioned such that the desired fiber content by volume is achieved. The nozzle 123 is adjoined by the duct 125, wherein the duct 125 has a cross-sectional face which is so large that the impregnated fiber structure which is guided through the duct 125 does not contact the walls of the duct 125. In order to prevent that air bubbles or gas bubbles are incorporated into the fiber structure when impregnating, the device for adjusting the fiber content by volume 100 by way of the nozzle 123 submerges into the matrix material in the bath 31. The impregnated fiber structure, after passing the nozzle 123, can be guided out of the matrix material in the bath 31 through the duct 125 that adjoins the nozzle 123, without said fiber structure once again coming into contact with the matrix material, such that the fiber content by volume after passing the nozzle 123 is no longer changed. To this end, the duct 125 is connected to the nozzle 123 in a liquid-tight manner such that no matrix material can make its way out of the bath 31 into the duct 125. The end of the duct 125 through which the fiber structure exits, in operation is located outside the matrix material.

In order for the fibers to be able to be placed into the device 23 for impregnating fiber structure in a simple manner, the wipers 39.1 that act on the fiber structure from above, and the device for adjusting the fiber content by volume 100, are preferably fitted so as to be retrievable from the bath 31. The fiber structure 12 to be impregnated is first located outside the matrix material, above the bath 31. The fiber structure 13 is first placed into the device for adjusting the fiber content by volume 100. The wipers 39.1 which act on the fiber structure 13 from above are likewise still located outside the bath 31. Once the fiber structure 12 has been placed into the device for adjusting the fiber content by volume 100, said fiber structure 13 by way of the wipers 39.1 that act on the fiber structure 13 from above is pressed downward. To this end, the wipers 39.1 preferably are fitted to the lid 37 which is placed onto the lower part 35 that contains the bath 31. In order for the device for adjusting the fiber content by volume 100 to be positioned such that said device for adjusting the fiber content by volume 100 by way of one side, preferably the side that has the nozzle 123, can submerge into the matrix material that is contained in the bath 31, and the other end of the device for adjusting the fiber content by volume 100, from which the impregnated fiber structure can exit again, is outside the matrix material, the device for adjusting the fiber content by volume 100 is preferably fitted so as to be movable on a suitable mounting by way of which the device for adjusting the fiber content by volume 100 can be fitted to the container that contains the bath 31.

For this purpose, the device for adjusting the fiber content by volume 100 herein by way of a first arm 127 is fitted to the lid 37, and by way of a second arm 129 is fitted to the lower part 35.

The first arm 127 and the second arm 129 are in each case fastened to the duct 125 of the device for adjusting the fiber content by volume 100 so as to be rotatable about an axis that runs perpendicularly to the fiber structure 13. On account thereof, the device for adjusting the fiber content by volume 100, when closing the lid 37, is moved to the desired position. The fiber structure is pressed into the matrix material in the bath 31 by way of the wipers 39.1 which are fastened to the lid 37 and act on the fiber structure 13 from above, wherein the fiber structure in the case of a closed lid by way of the wipers 39.1 that act on the fiber structure 13 from above is pressed against the wipers 39.2 that act on the fiber structure from below. The wiper 39.2 that acts on the fiber structure 13 from below herein is fastened to the lower part 35.

The fiber structure can be fed as a fiber bundle or as a bundle from a plurality of individual rovings, and can be split in the bath 31 into individual fibers, units from a lower number of fibers, or individual rovings, in order for the fibers to be able to be completely impregnated, wherein the fibers or rovings after soaking are gathered again, before said fibers or rovings are guided through the device for adjusting the fiber content by volume. Splitting herein can be performed by using deflection units 33 along which the individual fibers, units from a lower number of fibers, or rovings are guided.

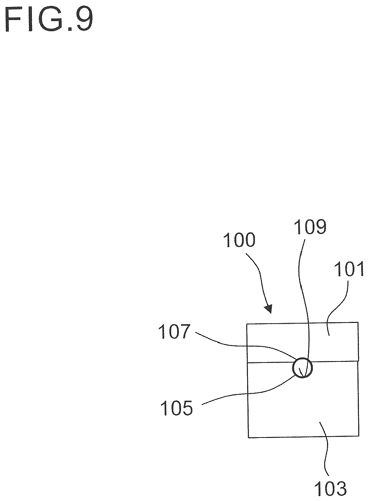

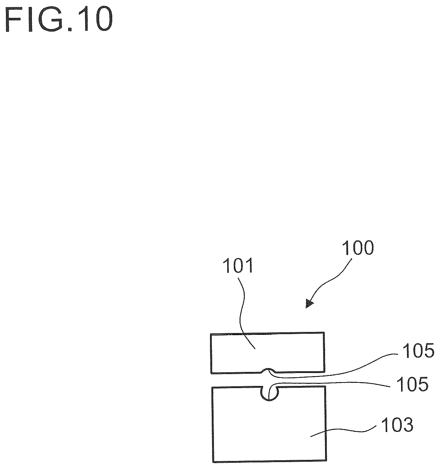

Figures 9 and 10 show a device to adjust the fiber content by volume in a closed and an opened position.

The device for adjusting the fiber content by volume 100 comprises an upper part 101 and a lower part 103. In each case one clearance 105 is located in the upper part 101 and in the lower part 103. When the upper part 101 and the lower part 103 are assembled, the clearances 105 form one opening 107. In the operation, fibers that are impregnated with matrix material are guided through the opening 107, and excess matrix material is wiped on the periphery 109 of the opening.

On account of the construction of the device for adjusting the fiber content by volume 100, having the upper part 101 and the lower part 103, it is possible for the unit for setting the fiber content by volume 100 to be opened, as is illustrated in figure 10. This enables the fibers to be placed into the unit for setting the fiber content by volume 100 in a simpler manner.

The minimum opening cross section herein during impregnation meets the following condition:

$$A = \frac{n \cdot Tex}{\varphi \cdot \rho}$$

where

n = number of fibers which in the operation are guided through the opening;
Tex = the fiber count Tex in g/1000 m;
$\varphi$ = fiber content by volume;
$\rho$ = density of the fibers.

It applies to the fiber content by volume $\varphi$ that

$$\varphi = \frac{V_{Fiber}}{V_{Fiber} + V_{Matrix}}$$

with the fiber volume $V_{Fiber}$ and the matrix volume $V_{Matrix}$.

When rovings or planar fibrous structures are impregnated, it is possible for the number and the Tex count of the rovings or of the planar fibrous structures, respectively, which are guided through an opening to be inserted instead of the number and the Tex count of the fibers.

To allow a continuous process, it is necessary to continuously provide the matrix material. For this purpose, it is preferred to provide a metering unit for the matrix material on the device 23 for impregnating the fibers. Particularly if a two or more component resin is used, the components must be mixed before impregnating the fiber structure 13. For this purpose, it is preferred to use a device 201 for mixing and metering the matrix material.

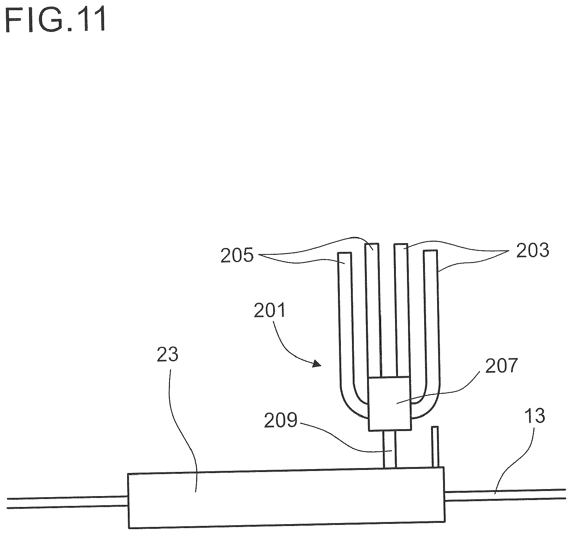

A side view of a device for impregnating a fiber structure with a device for mixing and metering the matrix material is shown in figure 11.

As in a two component resin generally the two components start to react forming the polymer after being brought into contact, it is necessary that the mixture only has a short residence time. Therefore, the bath of the device 13 for impregnating the fiber structure only contains a small amount of the two component resin as matrix material. Therefore, for a continuous process it is necessary to continuously add new matrix material into the bath.

For feeding the components of the two component resin, the device 201 for mixing and metering the matrix material comprises a first circulation 203 for the first component and a second circulation 205 for the second component. During operation the first component is circulated through the first circulation 203 and the second component through the second circulation 205.

A part of the first and second components which are circulated through the first and second circulations 203, 205 is fed into a mixing head 207. In the mixing head 207 the first and second components are mixed and then metered into the bath of the device 23 for impregnating the fiber structures via a feed line 209. For a residence time of the mixed first and second components as short as possible, the mixing head 207 is positioned as close as possible to the device 23 for impregnating the fiber structure. For this purpose, the feed line 209 also is as short as possible. Alternatively, it is possible to omit the feed line 209 and to mount the mixing head 207 directly on the device 23 for impregnating the fiber structure.

The mixing head 207 may comprise any suitable mixer for mixing the first and second components of the two component resin. Such mixer may be dynamic mixers or static mixers. Particularly preferably, the mixing head 207 comprises a static mixer.

List of reference numbers

**[0123]**

| | |
|---|---|
| 1 | liner |
| 3 | first holding device |
| 5 | second holding device |
| 7 | support |
| 9 | central axis |
| 11 | movable arm |
| 12 | cutting device |
| 13 | fiber structure |
| 14 | sleeve with pincers |
| 15 | woven pattern |
| 16 | sleeve |
| 17 | movable arm |
| 18 | pincer |
| 19 | feed point for the continuous fiber |
| 21 | fiber supply |
| 23 | device for impregnating the fibers |
| 25 | liner with wound fiber structure |
| 27 | curing station |
| 29 | mold |
| 31 | bath |
| 33 | deflection unit |
| 35 | lower part |
| 37 | lid |
| 39.1 | wiper acting on the fiber structure from above |
| 39.2 | wiper acting on the fiber structure from below |
| 41 | deflection roller |
| 43 | running direction |
| 45 | deflection roller |
| 100 | device for adjusting the fiber content by volume |
| 101 | upper part |
| 103 | lower part |
| 105 | clearance |
| 107 | opening |
| 109 | periphery of opening |
| 123 | nozzle |
| 125 | duct |
| 127 | first arm |
| 129 | second arm |
| 201 | device for mixing and metering the matrix material |
| 203 | first circulation |
| 205 | second circulation |
| 207 | mixing head |
| 209 | feed line |

**Claims**

1. A device for producing composite components comprising at least one wound fiber reinforced polymer layer, comprising:

   - a support (7) with a first holding device (3) and a second holding device (5) for mounting a liner (1) in between, wherein the first (3) and the second (5) holding device are established such that the liner (1) can rotate around a central rotation axis (9) which extends through the first holding device (3) and the second holding device (5), and
   - at least two movable arms (17) for feeding a fiber structure (13),

   wherein the support (7) is established such that the liner (1) can be moved axially parallel to the central rotation axis (9) and each movable arm (17) for feeding the fiber structure (13) is a robotic arm which comprises at least two joints which each allow bending and twisting.

2. The device according to claim 1, wherein each movable arm (17) for feeding the fiber structure (13) comprises a device (23) for impregnating the fiber structure, wherein the device (23) for impregnating the fiber structure preferably comprises a bath (31) for receiving a matrix material, a deflection unit for pressing the fiber structure (13) into the bath (31) and a draining unit.

3. The device according to claim 2, wherein the device (23) for impregnating the fiber structure comprises a device (100) to adjust fiber content by volume.

4. The device according to claim 2 or 3, wherein at least one device (23) for impregnating the fiber structure (13) is placed at an end of each movable (17) arm for feeding the fiber structure which can be moved perpendicular to the central rotation axis (9).

5. The device according to any of claims 2 to 4, wherein the movable arm (17) for feeding the fiber structure is established such that the device (23) for impregnating the fiber structure keeps a horizontal orientation independently of the position of the end of the movable arm (17) for feeding the fiber structure.

6. The device according to any of claims 1 to 5, wherein the support (7) and the movable arms (17) for feeding the fiber structure are arranged such that the central rotation axis (9) runs in an angle in the range from 65 to 90° with respect to the horizontal.

7. The device according to any of claims 1 to 6, wherein each movable arm (17) for feeding the fiber structure (13) is assigned to a supply (21) for a fiber structure.

8. The device according to any of claims 1 to 7, wherein each movable arm (17) for feeding the fiber structure (13) comprises a cutting device for cutting the fiber structure (13) and/or each movable arm (17) for feeding the fiber structure (13) comprises a pincer for placing the fiber structure (13) on the liner (1).

9. The device according to any of claims 1 to 7 wherein a cutting device (12) and a sleeve (16) with pincers (18) for attaching impregnated fibers on the liner (1) are placed on the first holding device (3) or the second holding device (5).

10. The device according to any of claims 1 to 9, wherein the support (7) is mounted to a movable arm (11) which allows for taking a liner (1) from a liner supply, moving the liner (1) into a position for applying the fiber structure (13), and placing the liner (25) after application of the fiber structure to a following working unit.

11. The device according to any of claims 2 to 10, further comprising a device (201) for mixing and metering the matrix material, the device (201) for mixing and metering the matrix material comprising a mixing head which is positioned in close proximity to the device (23) for impregnating the fiber structure.

12. A process for producing a composite component comprising at least one wound fiber reinforced layer, comprising:

(a) taking a liner (1) from a liner supply with the first holding device (3) and the second holding device (5) of a device according to any of claims 1 to 11;
(b) moving the liner (1) into a position for applying a fiber structure (13);
(c) attaching the fiber structure on the liner
(d) applying the fiber structure on the liner by means of the movable arms for feeding the fiber structure of a device according to any of the claims 1 to 11, wherein the fiber structure is impregnated with a matrix material in a device for impregnating the fiber structure before being applied on the liner, the liner being rotated around the central rotational axis and being moved axially parallel to the central rotational axis during application of the fiber structure to apply the fiber structure in a predefined pattern on the liner;
(e) cutting each fiber structure after application of the fiber structure is finished;
(f) placing the liner with the applied fiber structure to a curing station
(g) optionally injecting a resin into a mold of the curing station in which the liner with the applied fiber structure is placed to produce a surface coating layer
(h) curing the matrix material and the resin, if injected.

13. The process according to claim 12, wherein the liner (1) is a stiff liner or an inflatable bladder.

14. The process according to claim 12 or 13, wherein the liner (1) is moved to a predefined position before cutting the fiber structures (13).

15. The process according to any of claims 12 to 14, wherein the liner (25) with the applied fiber structure rotates around a horizontal rotation axis during curing the matrix material.

**Patentansprüche**

1. Vorrichtung zur Herstellung von Verbundkomponenten, umfassend mindestens eine gewickelte faserverstärkte Polymerschicht, umfassend:

- einen Träger (7) mit einer ersten Haltevorrichtung (3) und einer zweiten Haltevorrichtung (5), um dazwischen eine Einlage (1) zu montieren, wobei die erste (3) und die zweite (5) Haltevorrichtung so eingerichtet sind, dass die Einlage (1) um eine zentrale Rotationsachse (9) herum rotieren kann, die sich durch die erste Haltevorrichtung (3) und die zweite Haltevorrichtung (5) erstreckt, und
- mindestens zwei bewegliche Arme (17), um eine Faserstruktur (13) einzuspeisen,

wobei der Träger (7) so eingerichtet ist, dass die Einlage (1) axial parallel zu der zentralen Rotationsachse (9) bewegt werden kann, und jeder bewegliche Arm (17) zum Einspeisen der Faserstruktur (13) ein Roboterarm ist, der mindestens zwei Gelenke umfasst, die jeweils Biegen und Drehen zulassen.

2. Vorrichtung nach Anspruch 1, wobei jeder bewegliche Arm (17) zum Einspeisen der Faserstruktur (13) eine Vorrichtung (23) zum Imprägnieren der Faserstruktur umfasst, wobei die Vorrichtung (23) zum Imprägnieren der Faserstruktur vorzugsweise ein Bad (31) zum Aufnehmen eines Matrixmaterials, eine Umlenkungseinheit zum Pressen der Faserstruktur (13) in das Bad (31) und eine Drainageeinheit umfasst.

3. Vorrichtung nach Anspruch 2, wobei die Vorrichtung (23) zum Imprägnieren der Faserstruktur eine Vorrichtung (100) zum volumenbezogenen Anpassen des Fasergehalts umfasst.

4. Vorrichtung nach Anspruch 2 oder 3, wobei mindestens eine Vorrichtung (23) zum Imprägnieren der Faserstruktur (13) an einem Ende jedes beweglichen (17) Arms zum Einspeisen der Faserstruktur platziert ist, die rechtwinklig zu der zentralen Rotationsachse (9) bewegt werden kann.

5. Vorrichtung nach einem der Ansprüche 2 bis 4, wobei der bewegliche Arm (17) zum Einspeisen der Faserstruktur so eingerichtet ist, dass die Vorrichtung (23) zum Imprägnieren der Faserstruktur unabhängig von der Position des Endes des beweglichen Arms (17) zum Einspeisen der Faserstruktur eine horizontale Orientierung beibehält.

6. Vorrichtung nach einem der Ansprüche 1 bis 5, wobei der Träger (7) und die beweglichen Arme (17) zum Einspeisen der Faserstruktur so angeordnet sind, dass die zentrale Rotationsachse (9) in einem Winkel im Bereich von 65 bis 90° in Bezug zu der Horizontalen verläuft.

7. Vorrichtung nach einem der Ansprüche 1 bis 6, wobei jeder bewegliche Arm (17) zum Einspeisen der Faserstruktur (13) einer Zuführung (21) für eine Faserstruktur zugewiesen ist.

8. Vorrichtung nach einem der Ansprüche 1 bis 7, wobei jeder bewegliche Arm (17) zum Einspeisen der Faserstruktur (13) eine Schneidvorrichtung zum Schneiden der Faserstruktur (13) umfasst, und/oder jeder bewegliche Arm (17) zum Einspeisen der Faserstruktur (13) eine Zange zum Platzieren der Faserstruktur (13) auf der Einlage (1) umfasst.

9. Vorrichtung nach einem der Ansprüche 1 bis 7, wobei eine Schneidvorrichtung (12) und eine Manschette (16) mit Zange (18) zum Befestigen imprägnierter Fasern auf der Einlage (1) auf der ersten Haltevorrichtung (3) oder der zweiten Haltevorrichtung (5) platziert sind.

10. Vorrichtung nach einem der Ansprüche 1 bis 9, wobei der Träger (7) an einem beweglichen Arm (11) montiert ist, wodurch ermöglicht wird, eine Einlage (1) von einer Einlagenzuführung zu nehmen, die Einlage (1) in eine Position zur Aufbringung der Faserstruktur (13) zu bewegen und die Einlage (25) nach Aufbringung der Faserstruktur an einer folgenden Arbeitseinheit zu platzieren.

11. Vorrichtung nach einem der Ansprüche 2 bis 10, ferner umfassend eine Vorrichtung (201) zum Mischen und Dosieren des Matrixmaterials, wobei die Vorrichtung (201) zum Mischen und Dosieren des Matrixmaterials einen Mischkopf umfasst, der in enger Nähe zu der Vorrichtung (23) zum Imprägnieren der Faserstruktur positioniert ist.

12. Verfahren zur Herstellung einer Verbundkomponente, umfassend mindestens eine gewickelte faserverstärkte Schicht, umfassend:

(a) Nehmen einer Einlage (1) von einer Einlagenzuführung mit der ersten Haltevorrichtung (3) und der zweiten Haltevorrichtung (5) einer Vorrichtung gemäß einem der Ansprüche 1 bis 11;
(b) Bewegen der Einlage (1) in eine Position zum Aufbringen einer Faserstruktur (13);
(c) Befestigen der Faserstruktur auf der Einlage,
(d) Aufbringen der Faserstruktur auf die Einlage mittels der beweglichen Arme zum Einspeisen der Faserstruktur von einer Vorrichtung gemäß einem der Ansprüche 1 bis 11, wobei die Faserstruktur in einer Vorrichtung zum Imprägnieren der Faserstruktur, bevor sie auf die Einlage aufgebracht wird, mit einem Matrixmaterial imprägniert wird, wobei die Einlage während der Aufbringung der Faserstruktur um die zentrale Rotationsachse rotiert wird und axial parallel zu der zentralen Rotationsachse bewegt wird, um die Faserstruktur in einem vordefinierten Muster auf die Einlage aufzubringen;
(e) Schneiden jeder Faserstruktur, nachdem die Aufbringung der Faserstruktur beendet ist;
(f) Platzieren der Einlage mit der aufgebrachten Faserstruktur auf einer Härtungsstation,
(g) gegebenenfalls Injizieren eines Harzes in ein Formwerkzeug der Härtungsstation, worin die Einlage mit der aufgebrachten Faserstruktur platziert ist, um eine Oberflächenbeschichtungsschicht herzustellen,

(h) Härten des Matrixmaterials und des Harzes, sofern injiziert.

13. Verfahren nach Anspruch 12, wobei die Einlage (1) eine starre Einlage oder eine befüllbare Blase ist.

14. Verfahren nach Anspruch 12 oder 13, wobei die Einlage (1) zu einer vordefinierten Position bewegt wird, bevor die Faserstrukturen (13) geschnitten werden.

15. Verfahren nach einem der Ansprüche 12 bis 14, wobei die Einlage (25) mit der aufgebrachten Faserstruktur während des Härtens des Matrixmaterials um eine horizontale Rotationsachse rotiert.

**Revendications**

1. Dispositif pour produire des composants composites comprenant au moins une couche de polymère renforcée par des fibres enroulées, comprenant :

   - un support (7) avec un premier dispositif de maintien (3) et un second dispositif de maintien (5) pour monter une doublure (1) entre les deux, le premier (3) et le second (5) dispositif de maintien étant établis de manière à ce que la doublure (1) puisse tourner autour d'un axe de rotation central (9) qui s'étend à travers le premier dispositif de maintien (3) et le second dispositif de maintien (5) et
   - au moins deux bras mobiles (17) pour alimenter une structure fibreuse (13),

   le support (7) étant établi de manière à ce que la doublure (1) puisse être déplacée axialement parallèlement à l'axe de rotation central (9) et chaque bras mobile (17) pour alimenter par la structure fibreuse (13) est un bras robotisé qui comprend au moins deux articulations qui permettent chacune la flexion et la torsion.

2. Dispositif selon la revendication 1, chaque bras mobile (17) pour alimenter par la structure fibreuse (13) comprenant un dispositif (23) pour imprégner la structure fibreuse, le dispositif (23) pour imprégner la structure fibreuse comprenant de préférence un bain (31) pour recevoir un matériau de matrice, une unité de déflexion pour presser la structure fibreuse (13) dans le bain (31) et une unité de vidange.

3. Dispositif selon la revendication 2, le dispositif (23) d'imprégnation de la structure fibreuse comprenant un dispositif (100) d'ajustement de la teneur en fibres en volume.

4. Dispositif selon la revendication 2 ou 3, au moins un dispositif (23) d'imprégnation de la structure fibreuse (13) étant placé à une extrémité de chaque bras mobile (17) d'alimentation par la structure fibreuse pouvant être déplacée perpendiculairement à l'axe central de rotation (9).

5. Dispositif selon l'une quelconque des revendications 2 à 4, le bras mobile (17) pour alimenter en structure fibreuse étant établi de telle sorte que le dispositif (23) d'imprégnation de la structure fibreuse garde une orientation horizontale indépendamment de la position de l'extrémité du bras mobile (17) pour alimenter par la structure fibreuse.

6. Dispositif selon l'une quelconque des revendications 1 à 5, le support (7) et les bras mobiles (17) d'alimentation par la structure fibreuse étant disposés de telle sorte que l'axe de rotation central (9) s'étende selon un angle compris entre 65 et 90° par rapport à l'horizontale.

7. Dispositif selon l'une quelconque des revendications 1 à 6, chaque bras mobile (17) d'alimentation par la structure fibreuse (13) étant affecté à une alimentation (21) par la structure fibreuse.

8. Dispositif selon l'une quelconque des revendications 1 à 7, chaque bras mobile (17) d'alimentation par la structure fibreuse (13) comprenant un dispositif de coupe pour couper la structure fibreuse (13) et/ou chaque bras mobile (17) d'alimentation par la structure fibreuse (13) comprenant une pince pour placer la structure fibreuse (13) sur la doublure (1).

9. Dispositif selon l'une quelconque des revendications 1 à 7 un dispositif de coupe (12) et un manchon (16) avec des pinces (18) pour fixer les fibres imprégnées sur la doublure (1) étant placés sur le premier dispositif de maintien (3) ou le second dispositif de maintien (5).

10. Dispositif selon l'une quelconque des revendications 1 à 9, le support (7) étant monté sur un bras mobile (11) qui permet de prendre une doublure (1) dans une réserve de doublure, de déplacer la doublure (1) dans une position pour appliquer la structure fibreuse (13), et de placer la doublure (25) après l'application de la structure fibreuse sur une unité de travail suivante.

11. Dispositif selon l'une quelconque des revendications 2 à 10, comprenant en outre un dispositif (201) pour mélanger et doser le matériau de matrice, le dispositif (201) pour mélanger et doser le matériau de matrice comprenant une tête de mélange qui est positionnée à proximité du dispositif (23) pour imprégner la structure fibreuse.

12. Procédé de fabrication d'un composant composite comprenant au moins une couche renforcée par des fibres enroulées, comprenant :

(a) le prélèvement d'une doublure (1) dans une réserve de doublure avec le premier dispositif de maintien (3) et le second dispositif de maintien (5) d'un dispositif selon l'une quelconque des revendications 1 à 11 ;
(b) le déplacement de la doublure (1) dans une position permettant d'appliquer une structure fibreuse (13) ;
(c) la fixation de la structure fibreuse sur la doublure ;
(d) l'application de la structure fibreuse sur la doublure au moyen des bras mobiles d'alimentation par la structure fibreuse d'un dispositif selon l'une quelconque des revendications 1 à 11, la structure fibreuse étant imprégnée d'un matériau de matrice dans un dispositif d'imprégnation de la structure fibreuse avant d'être appliquée sur la doublure, la doublure étant mise en rotation autour de l'axe de rotation central et étant déplacé axialement parallèlement à l'axe de rotation central pendant l'application de la structure fibreuse afin d'appliquer la structure fibreuse selon un motif prédéfini sur la doublure ;
(e) la découpe de chaque structure fibreuse une fois l'application de la structure fibreuse terminée ;
(f) le placement de la doublure avec la structure fibreuse appliquée dans une station de durcissement
(g) l'injection éventuelle d'une résine dans un moule de la station de durcissement dans laquelle la doublure avec la structure fibreuse appliquée est placée pour produire une couche de revêtement de surface
(h) le durcissement du matériau de la matrice et de la résine, si elle a été injectée.

13. Procédé selon la revendication 12, la doublure (1) étant une doublure rigide ou une vessie gonflable.

14. Procédé selon la revendication 12 ou 13, la doublure (1) étant déplacée dans une position prédéfinie avant de couper les structures fibreuses (13).

15. Procédé selon l'une quelconque des revendications 12 à 14, la doublure (25) avec la structure fibreuse appliquée tournant autour d'un axe de rotation horizontal pendant le durcissement du matériau de la matrice.

# FIG.1

FIG.2

# FIG.3

# FIG.4

FIG.5

# FIG.6

# FIG.7

FIG.8

FIG.9

FIG.10

FIG.11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20070221316 A
- WO 2016183073 A
- US 6096164 A
- US 2005247396 A1
- KR 101906498 B
- WO 2016169531 A
- WO 2018036790 A
- WO 2019025439 A
- WO 2019115587 A
- US 9669589 A

### Non-patent literature cited in the description

- Filament Winding. **S.T. PETERS ; J. LOWRIE MCLARTY.** ASM Handbook. 2001, vol. 21, 536-549
- **R. SCHLEDJEWSKI.** Highly efficient pressure-vessel manufacturing. *JEC Magazine #34,* July 2007
- Clean Filament Winding: Process Optimisation. **N.E.H. SHOTTON-GALE.** Thesis. University of Birmingham, December 2012, 70-73
- **A. MIARIS.** Experimental and Simulative Analysis of the Impregnation Mechanics of Endless Fiber Rovings. *IVW-Schriftenreihe,* 2012, vol. 102, 6-13
- Entwicklung eines Verfahrens zur Herstellung von hochdrpierfähigen Carbonfaser-Halbzeugen aus Kurzspulen. **H. GROßE-RECHTIEN.** Abschlussbericht über eine Machbarkeitsstudie, gefördert unter dem AZ: 31143. Deutschen Bundesstiftung Umwelt, November 2014, 23-28
- **T. SOFI ; S. NEUNKIRCHEN ; R. SCHLEDJEWSKI.** *Advanced Manufacturing: Polymer & Composite Science,* 2018, vol. 4 (3), 57-72